# FASCICULE DE BREVET EUROPEEN

(11) **EP 3 711 077 B1**
(45) Date de publication et mention de la délivrance du brevet: **05.01.2022**
(21) Numéro de dépôt: 18819186.0
(22) Date de dépôt: 13.11.2018
(51) Int. Cl.: H01H 39/00, H01H 83/20, H01H 85/00, H01H 85/02

(54) **DISPOSITIF DE COUPURE PYROTECHNIQUE**
PYROTECHNISCHE SCHALTVORRICHTUNG
PYROTECHNIC SWITCHING DEVICE

(30) Priorité: 14.11.2017 FR 1760702
(43) Date de publication de la demande: 23.09.2020
(73) Titulaire: ARIANEGROUP SAS, 75015 Paris (FR); Mersen France SB SAS, 69720 Saint-Bonnet-de-Mure (FR)
(72) Inventeur: MATHIEU, Alexandre, 31820 Pibrac (FR); LORENZON, Romain, 33320 Eysines (FR); DE PALMA, Jean-François, 49124 Saint Barthelemy d'Anjou (FR)
(74) Mandataire: Cabinet Beau de Loménie
(86) Numéro de dépôt international: PCT/FR2018/052819
(87) Numéro de publication internationale: WO 2019/097152

(56) Documents cités:
- EP-A2- 0 863 528
- FR-A1- 3 045 204
- US-A1- 2005 083 165

## Description

### Arrière-plan de l'invention

La présente invention se rapporte au domaine général des dispositifs de coupure électrique, et plus particulièrement ceux du type à actionnement pyrotechnique. L'invention concerne aussi un système d'alimentation électrique sécurisé par un tel dispositif.

On connaît des dispositifs de coupure pyrotechnique comprenant un corps dans lequel est présent un initiateur pyrotechnique configuré pour, lorsqu'il est déclenché, mettre en mouvement un piston muni d'un relief en direction d'une barre conductrice pour la sectionner. Les documents WO 2016/038043 et WO 2016/038050 montrent des exemples de dispositifs de ce type qui permettent de réaliser une coupure en cas de sur-courant dans un circuit.

Le document US 2005/083165 A1 décrit un dispositif de coupure pyrotechnique selon le préambule de la revendication 1.

Il serait souhaitable de couper le courant non seulement en cas de sur-courant, mais aussi lorsque une anomalie non-électrique survient (un choc par exemple). Il existe donc un besoin pour disposer d'une solution de coupure fiable, compacte et de coût réduit pour ce faire.

### Objet et résumé de l'invention

La présente invention a donc pour but principal de pallier de tels inconvénients en proposant un dispositif de coupure pyrotechnique comprenant un premier et un deuxième initiateurs pyrotechniques, et un corps dans lequel sont présents :
- une portion conductrice de l'électricité dont au moins une partie est présente dans une chambre présente dans le corps, et
- un élément de coupure mobile délimitant la chambre et présentant un relief isolant de l'électricité lequel est en regard de la portion conductrice.

Le dispositif comprend en outre un élément fusible relié en série à la portion conductrice et configuré pour se déclencher lorsque l'intensité du courant qui le traverse dépasse une valeur prédéterminée, le premier initiateur étant relié aux bornes de l'élément fusible de sorte qu'un déclenchement de l'élément fusible actionne le premier initiateur, chaque initiateur étant configuré pour faire passer le dispositif de coupure d'une première configuration de passage du courant à une deuxième configuration de coupure du courant, l'élément de coupure mobile étant mis en mouvement vers la portion conductrice afin de la rompre par impact avec le relief lors du passage de la première à la deuxième configuration. Lorsque le courant traversant la portion conductrice atteint le seuil de déclenchement du fusible (valeur prédéterminée de courant), tout le courant traverse alors le premier initiateur, ce qui entraîne également son déclenchement et la coupure du courant par rupture de la portion conductrice. Lorsque le deuxième initiateur est déclenché, par exemple à l'aide d'un élément de contrôle extérieur au dispositif, la portion conductrice est également rompue et le courant est coupé.

Le dispositif de coupure selon l'invention permet ainsi de disposer des avantages d'un dispositif de coupure déclenché automatiquement par un dépassement de seuil de courant (premier initiateur), et d'un autre dispositif de coupure déclenché par une autre anomalie (deuxième initiateur), sans l'encombrement que représenterait un montage avec deux tels dispositifs connectés en série. L'utilisation de deux initiateurs distincts qui sont alors déclenchés par des connecteurs séparés permet d'éviter le couplage entre l'élément fusible et l'élément de contrôle qui résulterait de l'utilisation d'un unique initiateur qui serait connecté à la fois à un élément fusible et à un élément de contrôle. Un tel couplage peut alors détériorer l'élément de contrôle en cas de dépassement de la valeur seuil de courant à partir de laquelle l'élément fusible se déclenche. Le dispositif selon l'invention est ainsi fiable, de conception simple et compacte, et préserve l'intégrité de l'élément de contrôle qui peut être connecté au deuxième initiateur en cas de déclenchement en réponse à un dépassement de seuil de courant.

Chaque initiateur peut présenter une sortie, chaque sortie étant en communication avec une chambre de mise sous pression délimitée par l'élément de coupure mobile. L'élément de coupure mobile peut ainsi séparer la chambre de mise sous pression de la chambre dans laquelle la portion conductrice est présente. L'élément de coupure mobile peut être un piston présentant une section de forme oblongue dans un plan perpendiculaire à un axe selon lequel il se déplace dans le dispositif de coupure.

Dans un exemple de réalisation, l'élément de coupure mobile peut être configuré pour rompre la portion conductrice par impact avec le relief au niveau d'une zone distincte de celle où l'élément fusible est présent lors du passage de la première à la deuxième configuration.

Dans un exemple de réalisation, l'élément fusible peut être présent à l'intérieur du corps. En particulier, l'élément fusible peut être présent dans la chambre dans laquelle la portion conductrice est présente.

Dans un exemple de réalisation, l'élément fusible peut être présent dans une deuxième chambre présente dans le corps et distincte de la chambre dans laquelle la portion conductrice est présente. Cette deuxième chambre peut être une cavité présente à l'intérieur du corps, par exemple disposée sous la portion conductrice.

Dans un exemple de réalisation, l'élément fusible peut être présent dans une enveloppe isolante contenant une poudre d'un matériau isolant de l'électricité.

Dans un exemple de réalisation, l'élément fusible peut être rapporté sur la portion conductrice.

Dans un exemple de réalisation, l'élément fusible peut être constitué par une zone amincie de la portion conductrice.

Dans un exemple de réalisation, l'élément de coupure mobile peut comprendre au moins un deuxième relief en regard de la portion conductrice, et la portion conductrice peut présenter au moins une fente de guidage destinée à coopérer avec le deuxième relief lors du passage de la première à la deuxième configuration, le deuxième relief étant, dans la première configuration, plus proche de la portion conductrice que le relief isolant. Une telle disposition améliore la fiabilité de la coupure. En effet, lors du passage de la première à la deuxième configuration, et avant que le relief isolant n'impacte la portion conductrice, le deuxième relief s'engagera dans la fente correspondante de la portion conductrice et permettra de guider le piston tout en maintenant en position la portion conductrice au moment de l'impact avec le piston. Dans un exemple de réalisation, le deuxième relief peut s'étendre transversalement par rapport au relief qui est destiné à impacter la portion conductrice. Dans un exemple de réalisation, le deuxième relief peut s'étendre à partir d'une face inférieure de l'élément de coupure mobile sur une distance supérieure à la distance sur laquelle s'étend le relief qui est destiné à impacter la portion conductrice à partir de ladite face.

Dans un exemple de réalisation, le dispositif peut comprendre en outre un élément fusible supplémentaire relié en parallèle à la portion conductrice, ledit élément fusible supplémentaire étant configuré pour se déclencher lorsque l'intensité du courant qui le traverse dépasse une valeur prédéterminée, ledit élément fusible supplémentaire présentant un temps de pré-arc supérieur au temps mis par le dispositif de coupure pour passer de la première configuration à la deuxième configuration.

Lors d'un fonctionnement normal du système (c'est-à-dire lorsque le dispositif de coupure est dans la première configuration), l'élément fusible supplémentaire est passant, le courant traverse la portion conductrice et l'élément fusible supplémentaire. En revanche, lorsque l'intensité du courant traversant le circuit électrique dépasse la valeur prédéterminée pour l'élément fusible relié en série à la portion conductrice ou lorsqu'un initiateur est déclenché par l'élément de contrôle, le dispositif de coupure passe dans la deuxième configuration. L'élément fusible supplémentaire étant choisi pour présenter un temps de pré-arc supérieur au temps mis pour déconnecter la portion conductrice, l'élément fusible supplémentaire est toujours passant au moment où le dispositif de coupure arrive dans la deuxième configuration. De la sorte, l'élément fusible supplémentaire court-circuite le dispositif de coupure, évitant l'apparition d'un arc électrique au sein de ce dernier. Dans un deuxième temps, le courant circulant dans l'élément fusible supplémentaire va faire fondre ce dernier, ce qui va provoquer la coupure complète du courant électrique circulant dans le circuit. Par « temps de pré-arc », on entend, de façon connue en soi, le temps que met l'élément fusible supplémentaire pour fondre et se volatiliser lorsqu'il est parcouru par un courant d'intensité supérieure ou égale à une valeur prédéterminée.

Un avantage du deuxième élément fusible est que la formation d'un arc électrique au niveau de la portion conductrice rompue est évitée, puisque le courant peut encore circuler dans l'élément fusible supplémentaire pendant un court instant avant que ce dernier ne se déclenche et ne coupe le circuit. En outre, comme l'élément fusible supplémentaire est soumis pendant cet instant à toute l'intensité circulant dans le circuit électrique, son fonctionnement est fiable. Cela permet avantageusement d'améliorer la fiabilité de la coupure électrique effectuée.

Dans un exemple de réalisation, le courant de coupure de l'élément fusible supplémentaire (valeur prédéterminée de courant) peut être égal à une valeur nominale de courant électrique définie comme étant inférieure ou égale à quatre fois la valeur maximale de courant prévu pour circuler dans le dispositif en fonctionnement normal. Dans un exemple de réalisation, la tension de coupure (ou tension de claquage) de l'élément fusible supplémentaire peut être supérieure ou égale à une valeur nominale de tension définie comme étant la valeur maximale de tension prévue pour être appliquée aux bornes du dispositif en fonctionnement normal.

L'invention a également pour objet un système d'alimentation sécurisé comprenant au moins :
- un dispositif de coupure tel que celui présenté ci-avant,
- un circuit d'alimentation relié au dispositif de coupure, la portion conductrice étant reliée au circuit d'alimentation, et
- un élément de contrôle configuré pour actionner le deuxième initiateur lorsqu'une anomalie est détectée.

Dans un exemple de réalisation, l'anomalie peut être une anomalie non-électrique. Par « anomalie non-électrique », on entend par exemple un choc, c'est-à-dire un mouvement brusque comme une décélération brusque de l'élément de contrôle auquel le dispositif de coupure peut être relié, ou un dépassement de seuil de température ou de pression dans l'environnement de l'élément de contrôle.

L'invention vise encore un système électrique sécurisé comprenant un système d'alimentation sécurisé tel que défini ci-dessus, et un dispositif alimenté par ledit système d'alimentation sécurisé. Une installation électrique peut comprendre un tel système électrique sécurisé.

Un tel système électrique sécurisé peut se trouver par exemple dans un véhicule automobile, un avion, un train, une installation photovoltaïque, une installation domestique autonome.

### Brève description des dessins

D'autres caractéristiques et avantages de la présente invention ressortiront de la description faite ci-dessous, en référence aux dessins annexés qui en illustre un exemple de réalisation dépourvu de tout caractère limitatif. Sur les figures :
- la figure 1 est une vue en perspective éclatée d'un dispositif de coupure selon un premier mode de réalisation de l'invention,
- les figures 2A et 2B montrent un dispositif de coupure selon un mode de réalisation de l'invention respectivement dans la première et dans la deuxième configuration en coupe transversale selon les plans IIA et IIB des figures 3A et 3B,
- les figures 3A et 3B montrent des vues en coupe longitudinale du dispositif de coupure respectivement dans les configurations des figures 2A et 2B selon les plans longitudinaux IIIA et IIIB séparant les deux initiateurs,
- la figure 4 montre un système électrique sécurisé comprenant un système d'alimentation sécurisé selon un mode de réalisation de l'invention,
- les figures 5 et 6 montrent respectivement un dispositif de coupure selon un deuxième mode de réalisation de l'invention en coupe longitudinale et la portion conductrice utilisée dans ce mode de réalisation,
- la figure 7 montre un dispositif de coupure selon un troisième mode de réalisation de l'invention en coupe longitudinale, et
- la figure 8 montre un dispositif de coupure selon un quatrième mode de réalisation de l'invention au sein d'un système électrique sécurisé tel que celui de la figure 4.

### Description détaillée de l'invention

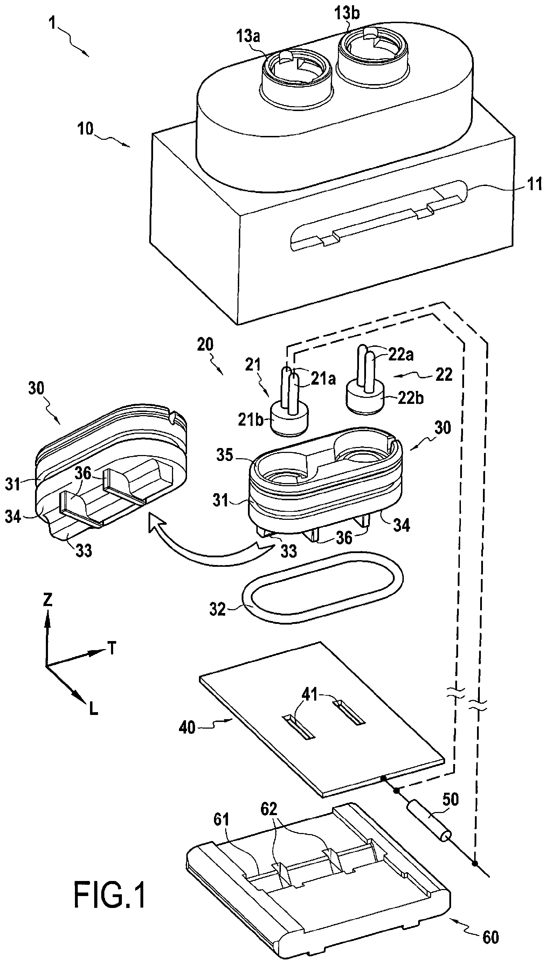

La figure 1 montre une vue éclatée d'un dispositif de coupure 1 selon un premier mode de réalisation de l'invention. Le dispositif de coupure 1 illustré comprend : un corps 10, un système d'initiation pyrotechnique 20, un piston 30, une portion conductrice 40, un élément fusible 50, et un support 60. L'élément fusible 50 est, selon l'invention, connecté en série à la portion conductrice 40. Dans l'exemple illustré, la direction longitudinale L correspond à la direction selon laquelle s'étend la portion conductrice 40 dans le dispositif 1. La direction transversale T est perpendiculaire à la direction L dans le plan de la portion conductrice 40.

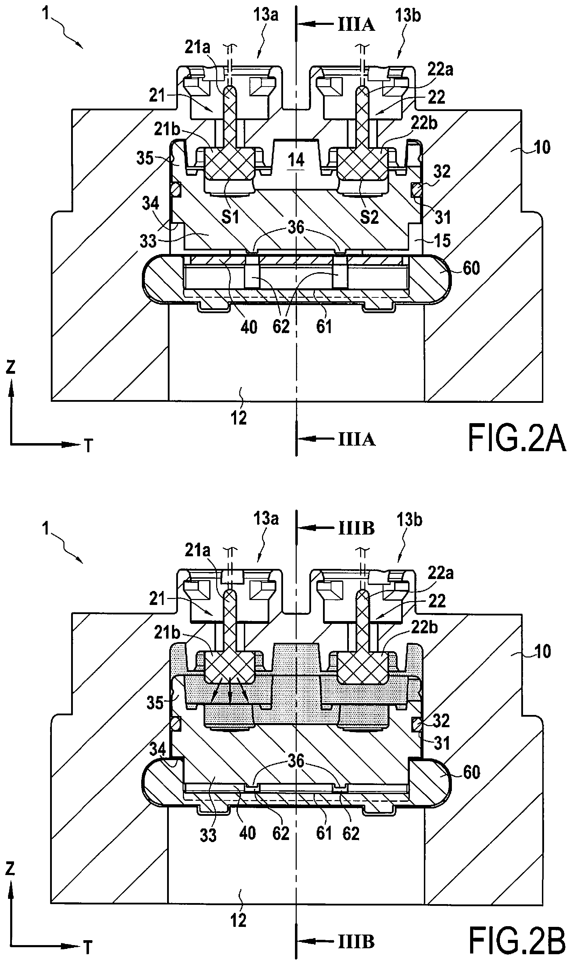

Le corps 10 comprend deux ouvertures latérales 11 sur deux faces opposées du corps 10 (seule une ouverture latérale 11 est visible sur la figure 1) par lesquelles le support 60 peut être inséré à l'intérieur du corps 10, une ouverture inférieure 12 (figures 2A-3B) par laquelle le piston 30 peut être inséré à l'intérieur du corps 10, et deux ouvertures supérieure 13a et 13b faisant saillie sur une face supérieure du corps 10. Le système d'initiation pyrotechnique 20 comprend un premier initiateur pyrotechnique 21 et un deuxième initiateur pyrotechnique 22 respectivement munis de connecteurs électriques 21a et 22a qui traversent les ouvertures 13a et 13b. Les ouvertures latérales 11 se prolongent selon la direction longitudinale L et se rejoignent à l'intérieur du corps 10 pour former un logement dans lequel le support 60 est maintenu dans le corps 10.

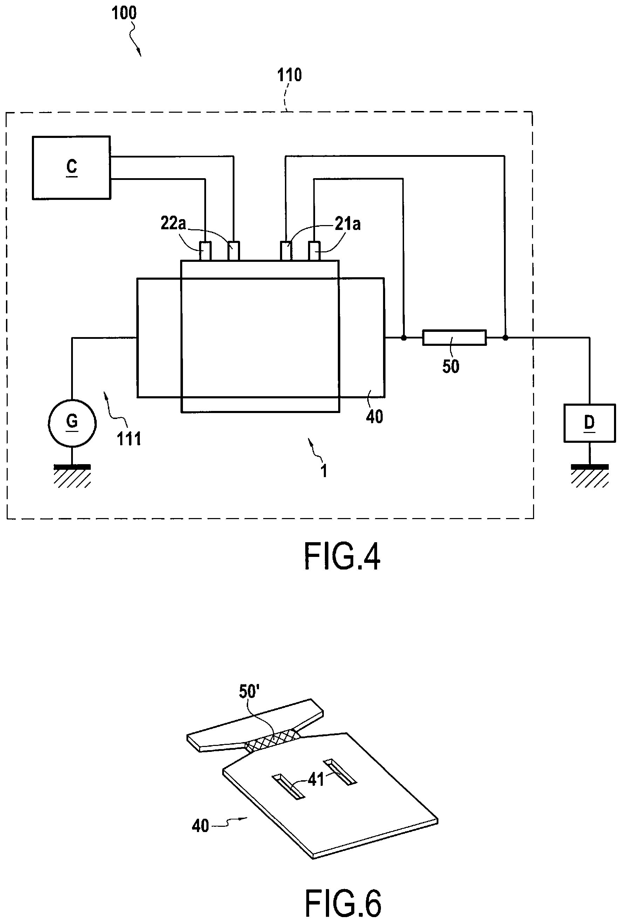

Les connecteurs électriques 21a et 22a des initiateurs pyrotechniques 21 et 22 sont configurés pour initier chacun une charge pyrotechnique 21b et 22b à laquelle ils sont connectés. Chaque charge pyrotechnique 21b et 22b est, lorsqu'elle est initiée (elles peuvent être initiées séparément) par exemple à l'aide d'un courant traversant les connecteurs électriques 21a ou 22a, apte à générer un gaz de pressurisation par sa combustion. Selon l'invention, le premier initiateur pyrotechnique 21 est relié, ici par l'intermédiaire de ses connecteurs 21a, en parallèle à l'élément fusible 50 (c'est-à-dire relié aux bornes de l'élément fusible 50). Le deuxième initiateur pyrotechnique 22 peut être relié par l'intermédiaire de ses connecteurs 22a à un élément de contrôle C (figure 4) configuré pour actionner le deuxième initiateur pyrotechnique 22 lorsqu'une anomalie est détectée.

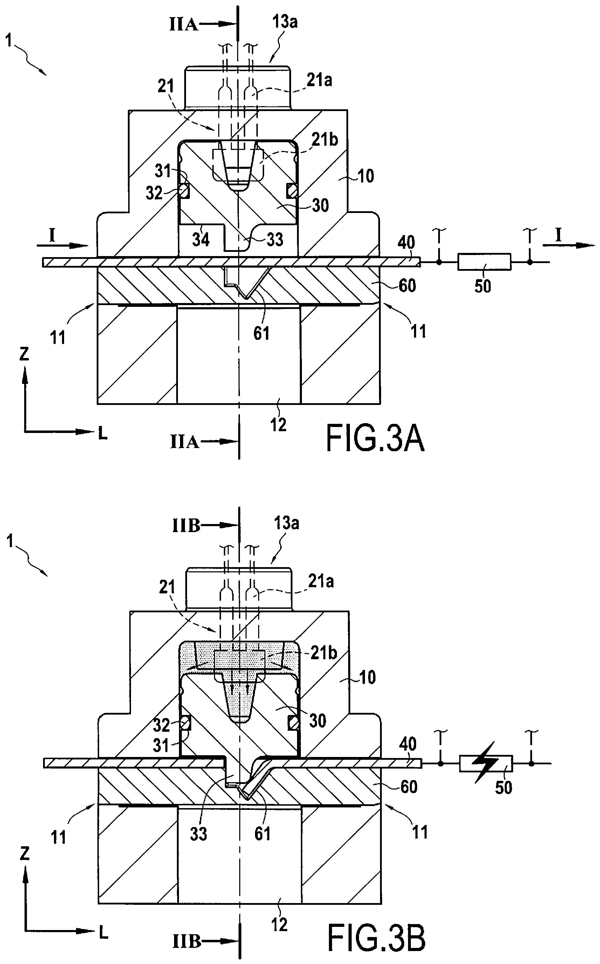

Le piston 30, constituant un élément de coupure mobile au sens de l'invention, présente une section de forme oblongue dans un plan perpendiculaire à une direction verticale Z du dispositif de coupure 1. La direction Z correspond à la direction selon laquelle le piston 30 se déplace dans le dispositif de coupure 1, et est ici perpendiculaire aux directions L et T. Le dispositif de coupure 1 comprend ici un unique piston 30. Le piston 30 comprend une gorge circonférentielle 31 dans laquelle un joint d'étanchéité 32, par exemple un joint torique, est destiné à être logé. Lorsque le piston 30 est dans le dispositif de coupure 1, le joint torique 32 assure une étanchéité entre le corps 10 et le piston 30. Le piston 30 peut se déplacer selon la direction Z à l'intérieur du corps 10 entre une position haute (première position, dispositif dans la première configuration), comme sur les figures 2A et 3A, et une position basse (deuxième position, dispositif dans la deuxième configuration), comme sur les figures 2B et 3B. Tant qu'un l'initiateur pyrotechnique 21 ou 22 n'a pas été déclenché, le piston 30 est maintenu dans la position haute. Bien entendu, le piston 30 peut présenter une forme différente de celle illustrée, adaptée à la forme de la cavité à l'intérieur du corps dans laquelle il se déplace.

Comme illustré sur les figures 2A-2B et 3A-3B, le corps 10 comprend une chambre de mise sous pression 14 en communication avec des sorties S1 et S2 des initiateurs pyrotechniques 21 et 22, et une chambre 15 dans laquelle est présente la portion conductrice 40. Le piston 30 sépare ainsi la chambre de mise sous pression 14 de la chambre 15 de façon hermétique à l'aide du joint d'étanchéité 32.

Conformément à l'invention, le piston 30 présente un relief 33 isolant de l'électricité. Plus précisément, le piston 30 comprend ici une face inférieure 34 à partir de laquelle fait saillie le relief 33. Le relief 33 est situé en regard de la portion conductrice 40. Le relief 33 s'étend généralement ici selon la direction transversale T. Le relief 33 présente ici une dimension dans la direction transversale T qui est égale ou légèrement supérieure à la dimension, selon cette même direction T, de la portion conductrice 40. Le relief 33 s'étend également selon la direction L et présente une épaisseur non nulle dans cette direction L. Le piston 30 comprend ici, du côté des initiateurs 21 et 22, une jupe 35 délimitant la chambre de mise sous pression 14 et permettant de guider le piston 30 dans le corps 10.

La portion conductrice 40 prend, dans l'exemple illustré, la forme d'une plaquette présentant une dimension dans la direction longitudinale L qui est supérieure à la dimension selon cette même direction du corps 10 de façon à dépasser de part et d'autre du dispositif de coupure 1 par les ouvertures latérales 11. Dans l'exemple illustré, la portion conductrice 40 comprend deux fentes de guidage 41 s'étendant ici selon la direction longitudinale L qui sont destinées à coopérer avec des reliefs longitudinaux 36 (deuxièmes reliefs) en saillie sur la face inférieure 34 du piston 30 après le déclenchement d'un initiateur 21 ou 22. Les reliefs longitudinaux 36 sont, dans la première configuration, plus proches de la portion conductrice 40 que le relief 33. La coopération des reliefs 36 et des fentes 41 permet de guider le piston 30 au moment de la rupture de la portion conductrice 40 tout en la maintenant en position, ce qui améliore la fiabilité de la coupure.

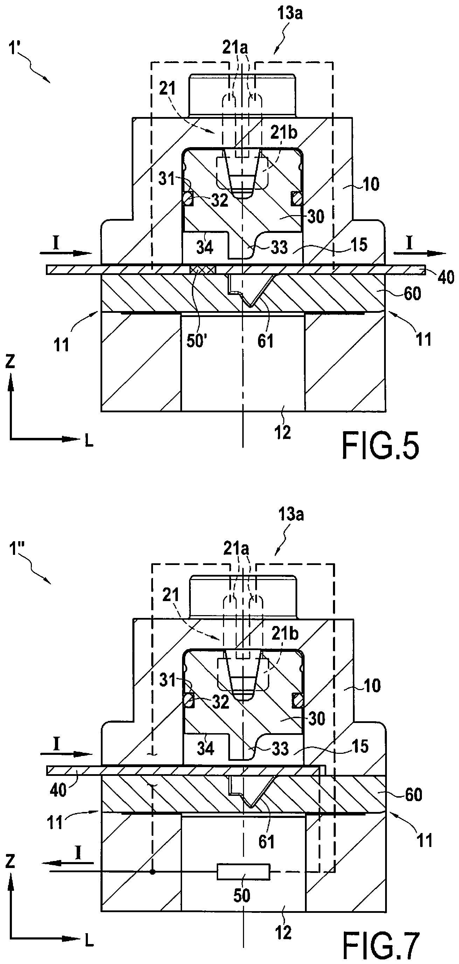

L'élément fusible 50 prend, dans l'exemple illustré, la forme d'un fusible commercial, c'est-à-dire qu'il est présent dans une enveloppe isolante contenant une poudre d'un matériau isolant de l'électricité. Par exemple, l'élément fusible 50 peut comprendre un fil fusible présent dans une poudre de silice. L'élément fusible 50 peut être, comme dans l'exemple illustré, présent à l'extérieur du corps ou, en variante, à l'intérieur du corps, comme dans les exemples des figures 5 à 7 qui seront décrits ultérieurement. Lorsqu'il est à l'intérieur du corps, l'élément fusible 50 peut être présent dans la chambre 15 ou dans une deuxième chambre distincte de celle-ci, comme dans l'exemple de la figure 7 qui sera décrit ultérieurement. L'élément fusible 50 peut, comme dans l'exemple illustré ici, être rapporté sur la portion conductrice 40, ou, en variante, être constitué par une zone amincie de la portion conductrice, comme dans l'exemple des figures 5 et 6 qui sera décrit ultérieurement.

Le support 60 prend, dans l'exemple illustré, la forme d'un tiroir sur lequel la portion conductrice 40 est présente. Dans l'exemple illustré, le support 60 est configuré pour maintenir la portion conductrice en position dans le dispositif de coupure 1, par exemple en y ménageant un logement correspondant. Le support 60 est ici muni d'une gorge 61 qui s'étend dans la direction transversale T et dans laquelle le relief 33 est destiné à venir se loger après déclenchement de l'un des initiateurs pyrotechniques 21 et 22, une fois que la portion conductrice 40 a été rompue. La gorge 61 dans le support permet ainsi de verrouiller le piston 30 dans la deuxième position et d'assurer une coupure définitive de la portion conductrice 40. Des encoches 62 correspondant aux reliefs longitudinaux 36 peuvent être présentes dans le support 60 pour loger lesdits reliefs 36 lorsque le dispositif 1 atteint la deuxième configuration.

Le fonctionnement du dispositif 1 va maintenant être décrit brièvement en lien avec les figures 2A-2B et 3A-3B. Aux figures 2A et 3A, le dispositif de coupure 1 n'est pas encore déclenché et est dans la première configuration, correspondant par exemple à une configuration de stockage ou de transport. Dans cette configuration, le piston 30 est dans une première position ou position haute. La portion conductrice 40 est intacte et un courant I (figure 3A) peut la traverser. Puis, deux situations peuvent se présenter. Dans une première situation qui est illustrée sur les figures 2A-2B et 3A-3B, le courant I dépasse la valeur prédéterminée ou seuil de déclenchement de l'élément fusible 50 et le déclenche (figure 3B), généralement en le faisant fondre, ce qui a pour effet de dévier tout le courant vers le premier initiateur pyrotechnique 21 qui se déclenche alors également. Dans une deuxième situation qui n'est pas illustrée sur les figures, c'est le deuxième initiateur pyrotechnique 22 qui est déclenché en réponse à un signal extérieur émanant par exemple d'un élément de contrôle C (figure 4) en réponse à une anomalie. Le déclenchement de l'un ou l'autre des initiateurs pyrotechniques 21 ou 22 génère alors un gaz de combustion qui pressurise la chambre de mise sous pression 14 et met en mouvement le piston 30 selon la direction Z vers la portion conductrice 40. Le piston 30 rompt ensuite par impact la portion conductrice 40 (figures 2B et 3B) et coupe le courant dans le dispositif de coupure 1. Le dispositif de coupure 1 se retrouve alors dans la deuxième configuration, le relief 33 du piston étant logé dans la gorge 61 du support 60. Dans tous les exemples illustrés, le piston 30 rompt la portion conductrice par impact avec le relief au niveau d'une zone distincte de celle où l'élément fusible 50 est présent. Dans une variante non illustrée, le piston 30 peut rompre la portion conductrice par impact avec le relief au niveau de la zone où l'élément fusible est présent, par exemple lorsque l'élément fusible constitue une zone amincie de la portion conductrice.

La figure 4 montre un exemple de système électrique sécurisé 100 mettant en œuvre un dispositif de coupure 1 selon un mode de réalisation de l'invention. Le système électrique sécurisé 100 comprend un système d'alimentation sécurisé 110 comprenant un dispositif de coupure 1 (représenté de façon très schématique) et un circuit d'alimentation 111. Le circuit d'alimentation 111 comprend ici un générateur électrique G relié à une extrémité de la portion conductrice du dispositif de coupure 1. Le générateur électrique G peut être par exemple une batterie ou un alternateur. Dans le dispositif de coupure 1, l'élément fusible 50 est connecté en série avec la portion conductrice 40, et le premier initiateur pyrotechnique 21 est relié en parallèle, par l'intermédiaire de ses connecteurs 21a, à l'élément fusible 50. Le système d'alimentation sécurisé 110 comprend en outre un élément de contrôle C configuré pour actionner le deuxième initiateur pyrotechnique 22 lorsqu'une anomalie est détectée. L'élément de contrôle C est connecté au deuxième initiateur pyrotechnique 22 par l'intermédiaire des connecteurs 22a. L'anomalie en réponse à laquelle l'élément de contrôle C peut déclencher le deuxième initiateur 22 peut être une anomalie non-électrique comme la détection d'un choc, par exemple une décélération brusque de l'élément de contrôle, d'un changement de température, de pression, etc. En cas de détection d'une anomalie, l'élément de contrôle C est apte à envoyer un courant électrique au deuxième initiateur pyrotechnique 22 pour son déclenchement afin de couper le courant, comme décrit précédemment. Le système électrique sécurisé 100 comprend enfin un dispositif électrique D relié à l'élément fusible 50 du dispositif de coupure 1 pour être alimenté par le système d'alimentation sécurisé 110. A titre d'exemple, un véhicule automobile peut comprendre un système électrique sécurisé 100.

Le dispositif de coupure 1 décrit précédemment présente une unique portion conductrice 40. Toutefois, on ne sort pas du cadre de la présente invention lorsque le dispositif présente plusieurs portions conductrices, par exemple deux ou trois portions conductrices, qui peuvent être rompues simultanément par le relief de l'élément de coupure mobile.

Les figures 5 et 6 montrent respectivement un dispositif de coupure 1' selon un deuxième mode de réalisation de l'invention en coupe longitudinale et la portion conductrice 40 qu'il comprend. Le dispositif 1' diffère du dispositif 1 décrit précédemment par le fait que l'élément fusible 50' constitue une zone amincie de la portion conductrice 40, comme cela est mieux visible sur la figure 6. Des fils électriques (représentés en pointillés) peuvent ainsi être prévus dans le dispositif 1' pour relier les connecteurs 21a du premier initiateur 21 en parallèle à l'élément fusible 50', comme illustré sur la figure 5. Le dispositif de coupure 1' fonctionne de la même manière que le dispositif 1 décrit précédemment.

La figure 7 montre enfin un dispositif de coupure 1" selon un troisième mode de réalisation de l'invention, en coupe longitudinale. Le dispositif 1" diffère du dispositif 1 décrit précédemment par le fait que l'élément fusible 50 est présent à l'intérieur du corps 10 et dans une deuxième chambre, constituée ici par une cavité formée par l'ouverture 12 et délimitée par le support 60, distincte de la chambre 15. Comme précédemment, des fils électriques (représentés en pointillés) peuvent être prévus dans le dispositif 1" pour relier les connecteurs 21a du premier initiateur 21 en parallèle à l'élément fusible 50, comme illustré sur la figure 7. Le dispositif de coupure 1" fonctionne de la même manière que les dispositifs 1 et 1' décrits précédemment.

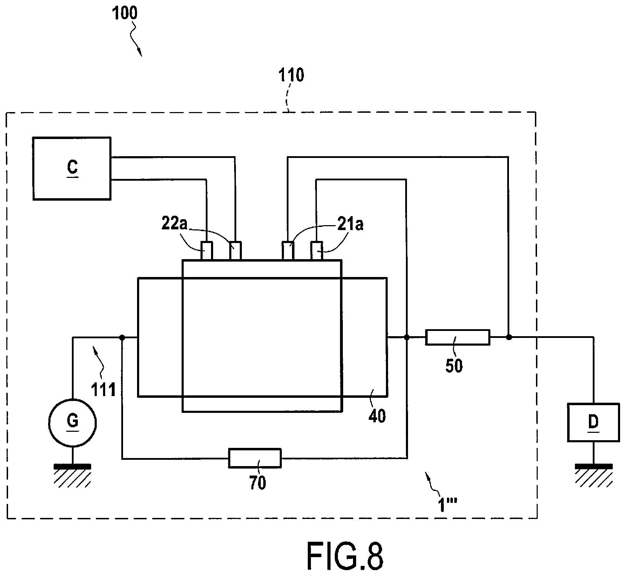

La figure 8 montre un système électrique sécurisé 100 similaire à celui illustré sur la figure 4. Les signes de références identiques entre les figures 4 et 8 désignent ainsi des caractéristiques identiques. Le dispositif de coupure 1"' selon un quatrième mode de réalisation de l'invention, présent dans le système 100 de la figure 8, comprend en outre un élément fusible 70 (élément fusible supplémentaire) connecté en parallèle de la portion conductrice 40 afin d'empêcher la formation d'un arc électrique au niveau de la portion conductrice 40 lorsque celle-ci se rompt. L'élément fusible 70 est connecté directement aux deux extrémités de la portion conductrice 40. L'élément fusible 70 peut présenter un courant de coupure, c'est-à-dire une valeur de courant prédéterminée à partir de laquelle il se déclenche, inférieure ou égale à quatre fois la valeur maximale de courant prévu pour circuler dans le circuit électrique en fonctionnement normal ; et une tension de coupure ou tension de claquage supérieure ou égale à la valeur maximale de tension prévue pour être appliquée aux bornes de la portion conductrice 40 en fonctionnement normal.

## Revendications

1. Dispositif de coupure pyrotechnique (1 ; 1' ; 1") comprenant un premier initiateur pyrotechnique (21), et un corps (10) dans lequel sont présents :
- une portion conductrice de l'électricité (40) dont au moins une partie est présente dans une chambre (15) présente dans le corps, et
- un élément de coupure mobile (30) délimitant la chambre et présentant un relief isolant de l'électricité (33) lequel est en regard de la portion conductrice,
le dispositif comprenant en outre un élément fusible (50 ; 50') relié en série à la portion conductrice (40) et configuré pour se déclencher lorsque l'intensité (I) du courant qui le traverse dépasse une valeur prédéterminée,
**caractérisé en ce qu'**il comprend un deuxième initiateur pyrotechnique (22) et **en ce que** le premier initiateur (21) est relié aux bornes de l'élément fusible (50) de sorte qu'un déclenchement de l'élément fusible actionne le premier initiateur, chaque initiateur (21, 22) étant configuré pour faire passer le dispositif de coupure d'une première configuration de passage du courant à une deuxième configuration de coupure du courant, l'élément de coupure mobile (30) étant mis en mouvement vers la portion conductrice (40) afin de la rompre par impact avec le relief (33) lors du passage de la première à la deuxième configuration.

2. Dispositif (1 ; 1' ; 1") selon la revendication 1, dans lequel l'élément de coupure mobile (30) est configuré pour rompre la portion conductrice par impact avec le relief (33) au niveau d'une zone distincte de celle où l'élément fusible (50 ; 50') est présent lors du passage de la première à la deuxième configuration.

3. Dispositif (1' ; 1") selon la revendication 1 ou 2, dans lequel l'élément fusible (50) est présent à l'intérieur du corps (10).

4. Dispositif (1') selon la revendication 3, dans lequel l'élément fusible (50) est présent dans la chambre (15) dans laquelle la portion conductrice est présente.

5. Dispositif (1") selon l'une quelconque des revendications 1 à 3, dans lequel l'élément fusible (50) est présent dans une deuxième chambre présente dans le corps et distincte de la chambre (15) dans laquelle la portion conductrice est présente.

6. Dispositif (1 ; 1") selon l'une quelconque des revendications 1 à 5, dans lequel l'élément fusible (50) est présent dans une enveloppe isolante contenant une poudre d'un matériau isolant de l'électricité.

7. Dispositif (1 ; 1") selon l'une quelconque des revendications 1 à 6, dans lequel l'élément fusible (50) est rapporté sur la portion conductrice (40).

8. Dispositif (1') selon l'une quelconque des revendications 1 à 4, dans lequel l'élément fusible (50) est constitué par une zone amincie de la portion conductrice (40).

9. Dispositif (1 ; 1' ; 1") selon l'une quelconque des revendications 1 à 8, dans lequel l'élément de coupure mobile (30) comprend au moins un deuxième relief (36) en regard de la portion conductrice (40), et la portion conductrice présente au moins une fente de guidage (41) destinée à coopérer avec le deuxième relief (36) lors du passage de la première à la deuxième configuration, le deuxième relief (36) étant, dans la première configuration, plus proche de la portion conductrice (40) que le relief isolant (33).

10. Dispositif (1"') selon l'une quelconque des revendications 1 à 9, comprenant en outre un élément fusible supplémentaire (70) relié en parallèle à la portion conductrice (40), ledit deuxième élément fusible étant configuré pour se déclencher lorsque l'intensité du courant qui le traverse dépasse une valeur prédéterminée, ledit deuxième élément fusible présentant un temps de pré-arc supérieur au temps mis par le dispositif de coupure pour passer de la première configuration à la deuxième configuration.

11. Système d'alimentation sécurisé (110) comprenant au moins :
- un dispositif de coupure (1 ; 1' ; 1" ; 1'") selon l'une quelconque des revendications 1 à 10,
- un circuit d'alimentation (111) relié au dispositif de coupure, la portion conductrice (40) étant reliée au circuit d'alimentation, et
- un élément de contrôle (C) configuré pour actionner le deuxième initiateur (22) lorsqu'une anomalie est détectée.

12. Système selon la revendication 11, dans lequel l'anomalie est une anomalie non-électrique.

13. Système électrique sécurisé (100) comprenant un système d'alimentation sécurisé (110) selon la revendication 11 ou 12, et un dispositif (D) alimenté par ledit système d'alimentation sécurisé.

14. Installation électrique comprenant un système électrique sécurisé (100) selon la revendication 13.

## Patentansprüche

1. Pyrotechnische Schaltvorrichtung (1; 1'; 1") umfassend einen ersten pyrotechnischen Auslöser (21) und einen Körper (10), der Folgendes enthält:
- einen elektrisch leitfähigen Abschnitt (40), von dem sich zumindest ein Teil in einer Kammer (15) des Körpers befindet, und
- ein bewegliches Schaltelement (30), das die Kammer begrenzt und ein elektrisch isolierendes Relief (33) aufweist, das dem leitfähigen Teil gegenüberliegt,
wobei die Vorrichtung ferner ein Sicherungselement (50; 50') umfasst, das mit dem leitfähigen Abschnitt (40) in Reihe geschaltet und so konfiguriert ist, dass es auslöst, wenn die Stärke (I) des durch es fließenden Stroms einen vorgegebenen Wert überschreitet,
**dadurch gekennzeichnet, dass** sie einen zweiten pyrotechnischen Auslöser (22) umfasst und dass der erste Auslöser (21) mit den Anschlüssen des Sicherungselement (50) verbunden ist, so dass das Auslösen des Sicherungselements den ersten Auslöser betätigt, wobei jeder Auslöser (21, 22) konfiguriert ist, um die Schaltvorrichtung von einer ersten Stromdurchflusskonfiguration in eine zweite Stromabschaltkonfiguration zu ändern, wobei das bewegliche Schaltelement (30) in Richtung des leitfähigen Abschnitts (40) bewegt wird, um diesen durch Aufprall auf das Relief (33) zu unterbrechen, wenn von der ersten in die zweite Konfiguration gewechselt wird.

2. Vorrichtung (1; 1'; 1") nach Anspruch 1, wobei das bewegliche Schaltelement (30) konfiguriert ist, um den leitfähigen Abschnitt durch Aufprall auf das Relief (33) in einem Bereich zu unterbrechen, der sich von dem Bereich unterscheidet, in dem sich das Sicherungselement (50; 50') befindet, wenn von der ersten in die zweite Konfiguration gewechselt wird.

3. Vorrichtung (1'; 1") nach Anspruch 1 oder 2, wobei sich das Sicherungselement (50) innerhalb des Körpers (10) befindet.

4. Vorrichtung (1') nach Anspruch 3, wobei sich das Sicherungselement (50) in der Kammer (15) befindet, in der sich der leitfähige Abschnitt befindet.

5. Vorrichtung (1") nach einem der Ansprüche 1 bis 3, wobei sich das Sicherungselement (50) in einer zweiten Kammer befindet, die in dem Körper vorhanden ist und die sich von der Kammer (15), in der sich der leitfähige Abschnitt befindet, unterscheidet.

6. Vorrichtung (1; 1") nach einem der Ansprüche 1 bis 5, wobei sich das Sicherungselement (50) in einer isolierenden Umhüllung befindet, die ein Pulver aus einem elektrisch isolierenden Material enthält.

7. Vorrichtung (1; 1") nach einem der Ansprüche 1 bis 6, wobei das Sicherungselement (50) an dem leitfähigen Abschnitt (40) angebracht ist.

8. Vorrichtung (1') nach einem der Ansprüche 1 bis 4, wobei das Sicherungselement (50) durch einen verdünnten Bereich des leitfähigen Abschnitts (40) gebildet wird.

9. Vorrichtung (1; 1'; 1") nach einem der Ansprüche 1 bis 8, wobei das bewegliche Schaltelement (30) mindestens ein zweites Relief (36) gegenüber dem leitfähigen Abschnitt (40) aufweist und der leitfähige Abschnitt mindestens einen Führungsschlitz (41) aufweist, der dazu bestimmt ist, mit dem zweiten Relief (36) beim Übergang von der ersten in die zweite Konfiguration zusammenzuwirken, wobei das zweite Relief (36) in der ersten Konfiguration näher an dem leitfähigen Abschnitt (40) liegt als das isolierende Relief (33).

10. Vorrichtung (1"') nach einem der Ansprüche 1 bis 9, die ferner umfassend ein zusätzliches Sicherungselement (70), das parallel zu dem leitfähigen Abschnitt (40) geschaltet ist, wobei das zweite Sicherungselement so konfiguriert ist, dass es auslöst, wenn die Stärke des durch es fließenden Stroms einen vorgegebenen Wert überschreitet, wobei das zweite Sicherungselement eine Vorlaufzeit hat, die größer ist als die Zeit, die die Schaltvorrichtung benötigt, um von der ersten Konfiguration in die zweite Konfiguration zu wechseln.

11. Abgesichertes Stromversorgungssystem (110) umfassend mindestens:
- eine Schaltvorrichtung (1; 1'; 1"; 1"') nach einem der Ansprüche 1 bis 10,
- eine Versorgungsschaltung (111), die mit der Schaltvorrichtung verbunden ist, wobei der leitfähige Abschnitt (40) mit der Versorgungsschaltung verbunden ist, und
- ein Steuerelement (C), das so konfiguriert ist, dass es den zweiten Auslöser (22) betätigt, wenn eine Störung erkannt wird.

12. System nach Anspruch 11, wobei die Störung eine nichtelektrische Störung ist.

13. Abgesichertes elektrisches System (100) umfassend ein abgesichertes Stromversorgungssystem (110) nach Anspruch 11 oder 12 und eine Vorrichtung (D), die von dem abgesicherten Stromversorgungssystem versorgt wird.

14. Elektrische Anlage mit einem abgesicherten elektrischen System (100) nach Anspruch 13.

## Claims

1. A pyrotechnic switching device (1; 1'; 1") comprising a first pyrotechnic initiator (21), and a body (10) in which are present:
- an electrically conductive portion (40) of which at least a part is present in a chamber (15) present in the body, and
- a mobile switching element (30) delimiting the chamber and having an electrically insulating relief (33) which faces the conductive portion,
the device also comprising a fuse element (50; 50') connected in series with the conductive portion (40) and configured to trip when the intensity (I) of the current passing through it exceeds a predetermined value,
**characterized in that** it comprises a second pyrotechnic initiator (22) and **in that** the first initiator (21) is connected to the terminals of the fuse element (50) so that tripping the fuse element actuates the first initiator, each initiator (21, 22) being configured to cause the switching device to switch from a first current conducting configuration to a second current interrupting configuration, the mobile switching element (30) being set in motion toward the conductive portion (40) in order to break it by the impact of the relief (33) during switching from the first to the second configuration.

2. The device (1; 1'; 1") according to claim 1, wherein the mobile switching element (30) is configured to break the conductive portion by the impact of the relief (33) at a zone distinct from that where the fuse element (50; 50') is present during switching from the first to the second configuration.

3. The device (1'; 1") according to claim 1 or 2, wherein the fuse element (50) is present inside the body (10).

4. The device (1') according to claim 3, wherein the fuse element (50) is present in the chamber (15) in which the conductive portion is present.

5. The device (1") according to any one of claims 1 to 3, wherein the fuse element (50) is present in a second chamber present in the body and distinct from the chamber (15) in which the conductive portion is present.

6. The device (1; 1") according to any one of claims 1 to 5, wherein the fuse element (50) is present in an insulating shell containing a powder of an electrically insulating material.

7. The device (1; 1") according to any one of claims 1 to 6, wherein the fuse element (50) is applied to the conductive portion (40).

8. The device (1') according to any one of claims 1 to 4, wherein the fuse element (50) consists of a thinned zone of the conductive portion (40).

9. The device (1; 1';1'') according to any one of claims 1 to 8, wherein the mobile switching element (30) comprises at least one second relief (36) facing the conductive portion (40), and the conductive portion has at least one guide slot (41) intended to cooperate with the second relief (36) during switching from the first to the second configuration, the second relief (36) being closer to the conductive portion (40), in the first configuration, than the insulating relief (33).

10. The device (1"') according to any one of claims 1 to 9, also comprising an additional fuse element (70) connected in parallel to the conductive portion (40), said second fuse element being configured to trip when the intensity of the current passing through it exceeds a predetermined value, said second fuse element having a pre-arc time greater than the time taken by the switching device to switch from the first configuration to the second configuration.

11. A secured power supply system (110) comprising at least:
- a switching device (1; 1'; 1"; 1'") according to any one of claims 1 to 10,
- a power supply circuit (111) connected to the switching device, the conductive portion (40) being connected to the power supply circuit, and
- a control element (C) configured to actuate the second initiator when an anomaly is detected.

12. The system according to claim 11, wherein the anomaly is a non-electrical anomaly.

13. A secured electrical system (100) comprising a secured power supply system (110) according to claim 11 or 12, and a device (D) supplied by said secured power supply system.

14. An electrical installation comprising a secured electrical system (100) according to claim 13.
